**Europäisches Patentamt**

**European Patent Office**

**Office européen des brevets**

(19)

(11) Veröffentlichungsnummer : **0 387 506 B1**

(12)

# EUROPÄISCHE PATENTSCHRIFT

(45) Veröffentlichungstag der Patentschrift :
**12.08.92 Patentblatt 92/33**

(51) Int. Cl.⁵ : **F04B 11/00, F04B 21/02**

(21) Anmeldenummer : **90101550.3**

(22) Anmeldetag : **26.01.90**

(54) **Hydraulische Hochdruckpumpe für eine Bremsanlage eines Fahrzeugs.**

(30) Priorität : **11.03.89 DE 3907969**

(43) Veröffentlichungstag der Anmeldung :
**19.09.90 Patentblatt 90/38**

(45) Bekanntmachung des Hinweises auf die
Patenterteilung :
**12.08.92 Patentblatt 92/33**

(84) Benannte Vertragsstaaten :
**DE ES FR GB IT SE**

(56) Entgegenhaltungen :
**EP-A- 0 169 287**
**DE-A- 1 453 434**
**DE-A- 2 047 940**
**DE-A- 2 643 860**
**GB-A- 2 041 076**

(73) Patentinhaber : **ROBERT BOSCH GMBH**
**Postfach 30 02 20**
**W-7000 Stuttgart 30 (DE)**

(72) Erfinder : **Zirps, Wilhelm**
**Immanuel-Kant-Strasse 9**
**W-7254 Hemmingen (DE)**

## Beschreibung

### Stand der Technik

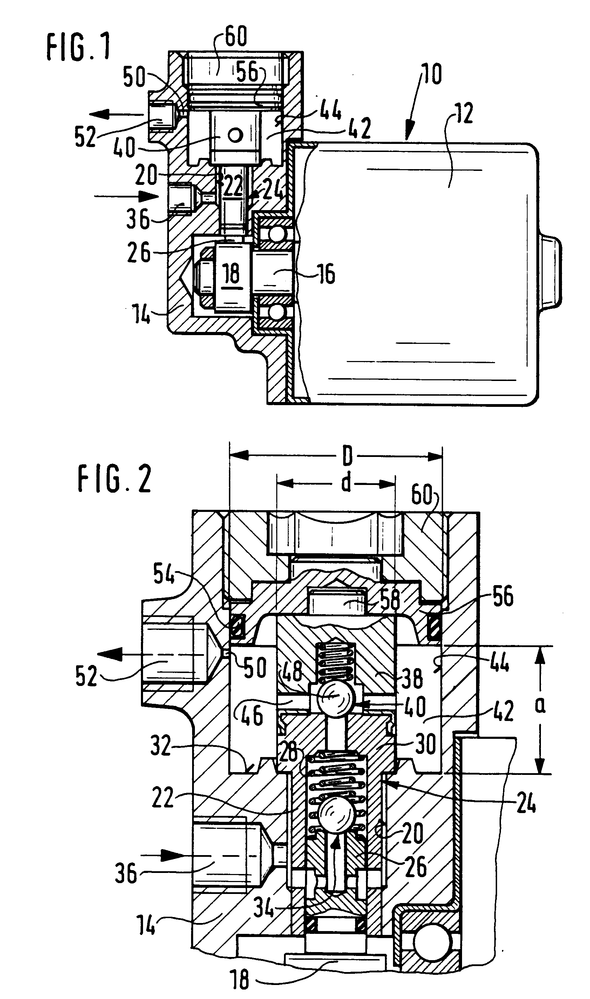

Die Erfindung geht aus von einer Hochdruckpumpe nach der Gattung des Hauptanspruchs. Eine derartige Hochdruckpumpe ist aus der DE-A-32 36 536 (Figur 3) bekannt. Die Pumpe wird zur Rückförderung von Bremsflüssigkeit aus einem Radbremszylinder zum Hauptbremszylinder der Bremsanlage verwendet. Die Pumpe ist eine bewährte Konstruktion, nachteilig ist jedoch die Förderstrom-Ungleichförmigkeit und die damit verbundene Druckschwankung in der Bremsflüssigkeit. Der Pumpenkolben saugt und fördert nämlich Flüssigkeit nur während jeweils einer halben Exzenterumdrehung. Bei im Blockierschutzbetrieb eingeschalteter Pumpe überträgt sich die Ungleichförmigkeit des Förderstroms auf den Hauptbremszylinder und erzeugt am Bremspedal Vibrationen. Dies ist zwar in gewissem Maß erwünscht, um den Fahrzeuglenker auf den kritischen Fahrzustand aufmerksam zu machen. Zugleich rufen die Vibrationen aber auch Schwingungen der Karosserie hervor, welche störende Geräusche im Fahrzeuginneren verursachen. Es ist aus der DE-A-26 43 860 (Figur 1 und 2) eine Bremsanlage für Fahrzeuge mit Antiblockiersystem bekannt, bei dem der hydraulischen Hochdruckpumpe in Fließrichtung der Bremsflüssigkeit nach dem Auslaßventil eine Dämpferkammer mit einer ausgangsseitigen Drosselbohrung nachgeordnet ist. Diese Kammer ist als mit Abstand zur Pumpe angeordneter, spanend erzeugter Hohlraum in einem Gehäuse enthalten. In der erstgenannten Veröffentlichung ist in Strömungsrichtung der Bremsflüssigkeit zwar ebenfalls nach dem Pumpenauslaßventil ein das Ventilgehäuse umgebender Ringraum vorhanden, dem jedoch ausgangsseitig keine Drossel folgt. Der verhältnismäßig kleine Ringraum kann deshalb keine Dämpfungswirkung im Sinne einer Glättung der Druckschwingungen des pulsierenden Förderstromes entfalten.

### Vorteile der Erfindung

Die erfindungsgemäße Hochdruckpumpe mit den kennzeichnenden Merkmalen des Hauptanspruchs hat demgegenüber den Vorteil, daß auf einfache Weise eine Dämpferkammer geschaffen werden kann. Dies erfolgt durch entsprechende Bemessung des zur Flüssigkeitsableitung ohnehin erforderlichen Ringraumes sowie Ausbildung der Pumpenausgangsbohrung als Drossel. Der erweiterte Ringraum ist in einem Arbeitsgang im Zuge der Herstellung der Bohrung zur Aufnahme von Pumpenzylinder und Auslaßventilgehäuse erzeugbar. Dadurch sind die Herstellkosten für die Dämpferkammer in Verbindung mit der Fertigung der Drosselbohrung gering. Durch die konzentrische Anordnung der Dämpferkammer zum Auslaßventil ist diese mit verhältnismäßig geringem Bauraum im Pumpengehäuse erzielbar. Außerdem ist die Wirksamkeit der Dämpferkammer aufgrund ihrer unmittelbaren räumlichen Zuordnung zum Auslaßventil sehr hoch, da hierdurch Schwingungen abstrahlende Leitungen vermieden werden.

Durch die in den Unteransprüchen aufgeführten Maßnahmen sind vorteilhafte Weiterbildungen und Verbesserungen der im Hauptanspruch angegebenen Hochdruckpumpe möglich.

Angaben zur zweckmäßigen Bemessung der Dämpferkammer sowie der Drosselbohrung sind in den Unteransprüchen 2 und 3 gekennzeichnet.

Besonders vorteilhaft ist die Maßnahme nach Unteranspruch 4, weil die Lagesicherung des Deckels und des Ventilgehäuses mit einem einzigen Verschlußelement erzielt wird. Diese Maßnahme wirkt sich mindernd auf die Herstellkosten der Hochdruckpumpe aus.

Außerdem ist die Ausgestaltung der Erfindung nach Unteranspruch 5 von Vorteil, weil hierdurch das umfangsseitig von der Dämpferkammer umgebene Auslaßventilgehäuse auf einfache Weise eine Lagefixierung in radialer Richtung erfährt.

### Zeichnung

Ein Ausführungsbeispiel der Erfindung ist in der Zeichnung dargestellt und in der nachfolgenden Beschreibung näher erläutert. Es zeigen Figur 1 eine Seitenansicht einer erfindungsgemäß ausgestalteten Hochdruckpumpe mit geschnitten gezeichnetem Pumpengehäuse und Figur 2 das Pumpengehäuse mit Einbauteilen in anderem Maßstab als in Figur 1.

### Beschreibung des Ausführungsbeispiels

Die in der Zeichnung dargestellte hydraulische Hochdruckpumpe 10 hat einen elektrischen Antriebsmotor 12, welcher mit einem Pumpengehäuse 14 auf nicht dargestellte Weise verbunden ist (Figur 1). In das Pumpengehäuse 14 greift eine Welle 16 des Antriebsmotors 12 ein. Die Motorwelle 16 ist mit einem Exzenter 18 versehen.

Das Pumpengehäuse 14 weist eine radial zur Motorwelle 16 verlaufende Bohrung 20 auf. In diese ist ein Zylinder 22 einer Radialkolbenpumpe 24 passend eingefügt, deren Kolben 26 unter der Wirkung einer Druckfeder 28 am Exzenter 18 angreift (Figur 2). Der mit einem Bund 30 an einer Bohrungsstufe 32 des Pumpengehäuses 14 axial abgestützte Pumpenzylinder 22 weist ein Ansaugventil 34 auf, welches mit einem Pumpeneingang 36 in Verbindung steht.

Auslaßseitig ist der Pumpenzylinder 22 durch eine Quetschverbindung mit einem Gehäuse 38 eines Auslaßventils 40 der Radialkolbenpumpe 24 verbunden. Das Auslaßventilgehäuse 38 ist auf seiner dem Exzenter 18 zugewandten Seite auf dem Pumpenzylinder 22 abgestützt und erstreckt sich gleichachsig zu diesem. Um das im wesentlichen durchmesserkonstante, kreiszylindrische Auslaßventilgehäuse 38 erstreckt sich ein Ringraum 42, welcher durch einen im Durchmesser erweiterten Abschnitt 44 der Pumpengehäusebohrung 20 gebildet ist. In den Ringraum 42 münden Auslaßkanäle 46 des eine federbelastete Ventilkugel 48 aufweisenden Auslaßventils 40. Mit dem Ringraum 42 steht außerdem eine als Drossel ausgebildete Bohrung 50 eines Pumpenausgangs 52 in Verbindung.

Der Ringraum 42 ist exzenterseitig durch die im wesentlichen radial verlaufende Bohrungsstufe 32 begrenzt. Auf seiner vom Exzenter 18 abgewandten Seite ist der Ringraum 42 durch einen mit Hilfe eines O-Ringes 54 dicht in den durchmesserkonstanten Bohrungsabschnitt 44 eingefügten Deckels 56 abgeschlossen. Dabei ist der Deckel 56 auf dem Auslaßventilgehäuse 38 abgestützt, welches mit einem Zentrierzapfen 58 in den Deckel eingreift. Außerdem ist eine Verschlußschraube 60 vorgesehen, welche in den Bohrungsabschnitt 44 eingeschraubt ist. Außer ihrer Funktion als Verschluß der Gehäusebohrung 20 sowie des Bohrungsabschnitts 44 dient die Verschlußschraube 60 dazu, den Deckel 56, das Auslaßventilgehäuse 38 sowie den Pumpenzylinder 22 in axialer Richtung im Pumpengehäuse 14 zu fixieren.

Die Pumpe hat folgende Wirkungsweise:

Bei niedergehendem Pumpenkolben 26 saugt die Pumpe 24 bei geöffnetem Ansaugventil 34 und geschlossenem Auslaßventil 40 durch den Pumpeneingang 36 Bremsflüssigkeit im Pumpenzylinder 22 an. Beim Aufwärtshub des Pumpenkolbens 26 wird die Flüssigkeit bei geöffnetem Auslaßventil 40 und geschlossenem Ansaugventil 34 durch die Auslaßkanäle 46 des Auslaßventilgehäuses 38 in den Ringraum 42 ausgestoßen. Die Bremsflüssigkeit verläßt den Ringraum 42 durch die Pumpenausgangsbohrung 50 des Pumpenausgangs 52.

Die Radialkolbenpumpe 24 fördert die Bremsflüssigkeit in einem diskontinuierlichen Strom. Die Bremsflüssigkeit wird daher pulsierend durch die Auslaßkanäle 46 des Auslaßventils 40 in den Ringraum 42 ausgestoßen. Dabei wird die von der Pumpe 24 der Bremsflüssigkeit mitgeteilte kinetische Energie in potentielle Energie umgeformt. Aufgrund des Volumens des Ringraums 42 wirkt dieser in Verbindung mit der drosselnden Pumpenausgangsbohrung 50 als Dämpfungskammer, in der, überwiegend aufgrund der Kompressibilität der Bremsflüssigkeit, eine Dämpfung der in der Flüssigkeit auftretenden Druckschwingungen erzielt wird. Die aus dem Pumpenausgang 52 abfließende Bremsflüssigkeit ist daher druckschwingungsarm.

Eine gute Dämpfwirkung des Ringraumes 42 ist erzielbar, wenn das freie Volumen des Ringraumes wenigstens dem Dreißigfachen eines Pumpenhub-Fördervolumens entspricht. Bei der Konstruktion der vorstehend beschriebenen Hochdruckpumpe 10 wird diese Relation dadurch erreicht, daß der Abstand a zwischen der Bohrungsstufe 32 und dem Deckel 56 etwa dem Außendurchmesser d des Auslaßventilgehäuses 38 und der Durchmesser D des Ringraums 42 wenigstens dem 1,5fachen des Auslaßventilgehäuse-Durchmessers entspricht. Von wesentlicher Bedeutung für die Wirksamkeit der Dämpferkammer ist ferner der Durchmesser der Pumpenausgangsbohrung 50. Bei einem Pumpenhub-Fördervolumen von beispielsweise 100 mm soll der Durchmesser der Pumpenausgangs-Bohrung 50 vorzugsweise weniger als 1 Millimeter betragen.

Die Hochdruckpumpe 10 weist beim beschriebenen Ausführungsbeispiel lediglich eine aus Zylinder 22 und Kolben 26 gebildete Pumpeneinheit auf. Abweichend hiervon kann die Hochdruckpumpe 10 auch mit mehreren Pumpeneinheiten, die jeweils einem Bremskreis der Fahrzeugbremsanlage zugeordnet sind, ausgestattet sein.

## Patentansprüche

1. Hydraulische Hochdruckpumpe (10) für eine Bremsanlage eines Fahrzeugs mit Antiblockiersystem, mit einem Gehäuse (14) mit wenigstens einer Bohrung (20) zur Aufnahme eines Zylinders (22) mit darin angeordnetem, von einem Exzenter (18) bewegbaren Pumpenkolben (26), mit einem am Zylinder (22) auf der vom Exzenter (18) abgewandten Seite gleichachsig abgestützten, im wesentlichen zylindrischen Gehäuse (38) eines Auslaßventils (40), welches unter Bildung eines Ringraumes (42) in einem erweiterten, kreiszylindrischen Abschnitt (44) der Bohrung (20) sitzt, in den wenigstens ein Auslaßkanal (46) des Ventils (40) einmündet, mit einer vom erweiterten Bohrungsabschnitt (44) ausgehenden Pumpenausgangsbohrung (50) und mit Mitteln (Verschlußschraube 60) zum Verschließen der Gehäusebohrung (20) sowie zum Halten des Pumpenzylinders (22) und des Auslaßventilgehäuses (38) im Pumpengehäuse (14), dadurch gekennzeichnet, daß der Ringraum (42) exzenterseitig im wesentlichen von einer Bohrungsstufe (32) des Pumpengehäuses (14) und exzenterabgewandt von einem dicht in den Bohrungsabschnitt (44) eingefügten, am Auslaßventilgehäuse (38) angreifenden Deckel (56) begrenzt ist, wobei das freie Volumen des Ringraumes (42) wenigstens dem Dreißigfachen eines Pumpenhub-Fördervolumens entspricht, und daß die Pumpenausgangsbohrung (50) als Drossel ausgebildet ist.

2. Pumpe nach Anspruch 1, dadurch gekennzeichnet, daß der Abstand (a) zwischen der Bohrungsstufe (32) und dem Deckel (56) etwa dem Durchmesser (d) des Auslaßventilgehäuses (38) und der Durchmesser (D) des Ringraumes (42) wenigstens dem 1,5fachen des Auslaßventilgehäuse-Durchmessers (d) entspricht.

3. Pumpe nach Anspruch 1, dadurch gekennzeichnet, daß bei einem Pumpenhub-Fördervolumen von 100 mm³ der Durchmesser der Pumpenausgangs-Bohrung (50) weniger als 1 mm beträgt.

4. Pumpe nach Anspruch 1, dadurch gekennzeichnet, daß am Deckel (56) eine in den Bohrungsabschnitt (44) eingeschraubte Verschlußschraube (60) angreift, mit der sowohl der Deckel (56) als auch das Auslaßventilgehäuse (38) in der Gehäusebohrung (20) gehalten sind.

5. Pumpe nach Anspruch 1, dadurch gekennzeichnet, daß ein Zentrierzapfen (58) des Auslaßventilgehäuses (38) in den Deckel (56) eingreift.


## Claims

1. Hydraulic high pressure pump (10) for a brake system of a vehicle with an anti-lock brake system, having a housing (14) with at least one bore (20) for accepting a cylinder (22) with a pump piston (26) located within it and movable by an eccentric (18), having an essentially cylindrical housing (38) of an outlet valve (40), which cylindrical housing (38) is supported on the cylinder (22) on the same axis and at the end remote from the eccentric (18) and is seated in a larger circular cylindrical section (44) of the bore (20) so as to form an annular space (42), into which section (44) at least one outlet duct (46) of the valve (40) enters, having a pump outlet hole (50) emerging from the larger bore section (44) and having means (screw plug 60) for closing the housing bore (20) and for holding the pump cylinder (22) and the outlet valve housing (38) in the pump housing (14), characterised in that the annular space (42) is substantially bounded at the eccentric end by a bore step (32) of the pump housing (14) and is bounded, remote from the eccentric, by a cap (56) introduced so as to be sealed in the bore section (44) and engaging on the outlet valve housing (38), the free volume of the annular space (42) being at least equal to 30 times a pump stroke supply volume and the pump outlet hole (50) being designed as a throttle.

2. Pump according to Claim 1, characterised in that the distance (a) between the bore step (32) and the cap (56) is approximately equal to the diameter (d) of the outlet valve housing (38) and the diameter (D) of the annular space (42) is equal to at least 1.5 times the outlet valve housing diameter (d).

3. Pump according to Claim 1, characterised in that for a pump stroke supply volume of 100 mm³, the diameter of the pump outlet hole (50) is less than 1 mm.

4. Pump according to Claim 1, characterised in that a screw plug (60) screwed into the bore section (44) engages at the cap (56), both the cap (56) and the outlet valve housing (38) being held in the housing bore (20) by means of the screw plug (60).

5. Pump according to Claim 1, characterised in that a centring spigot (58) of the outlet valve housing (38) engages in the cap (56).


## Revendications

1. Pompe hydraulique haute pression (10) pour un système de freinage d'un véhicule avec système antiblocage, avec un carter (14) comportant au moins un alésage (20) destiné à recevoir un cylindre (22) dans lequel est disposé un piston de pompe (26) susceptible d'être déplacé par un excentrique (18), avec un carter (38), en pratique cylindrique, d'une soupape de sortie (40) prenant appui co-axialement contre le cylindre (22) sur le côté de celui-ci opposé à l'excentrique (18), et qui en formant une chambre annulaire (42) est placé dans une partie cylindrique circulaire élargie (44) de l'alésage 20, dans laquelle débouche au moins un canal de sortie (46) de la soupape (40), avec un perçage (50) de sortie de la pompe sortant de la partie élargie (44) de l'alésage et avec des moyens (vis de fermeture 60) pour fermer l'alésage (20) du carter, ainsi que pour maintenir le cylindre (22) de la pompe et le carter (38) de la soupape de sortie dans le carter (14) de la pompe, pompe hydraulique haute pression caractérisée en ce que la chambre annulaire (42) est délimitée côté excentrique, essentiellement par un épaulement (32) de l'alésage du carter (14) de la pompe et à l'opposé de l'excentrique, par un couvercle (56) inséré de façon étanche dans la partie (44) de l'alésage et venant en prise contre le carter (38) de la soupape de sortie, tandis que le volume libre de la chambre annulaire (42) correspond au moins à trente fois le volume de refoulement de la course de la pompe, et que le perçage (50) de sortie de la pompe est réalisé sous la forme d'un étranglement.

2. Pompe selon la revendication 1, caractérisée en ce que la distance (a) entre l'épaulement (32) de l'alésage et le couvercle (56) correspond à peu près au diamètre (d) du carter (38) de la soupape de sortie, tandis que le diamètre (D) de la chambre annulaire (42) correspond au moins à une fois et demie le diamètre (d) du carter de la soupape de sortie.

3. Pompe selon la revendication 1, caractérisée en ce que pour un volume refoulé par la course de la pompe de 100 mm³, le diamètre du perçage de sortie (50) de la pompe est de moins de 1 mm.

4. Pompe selon la revendication 1, caractérisée en ce qu'une vis de fermeture (60), vissée dans la partie (44) de l'alésage, vient en prise sur le couvercle (56), vis grâce à laquelle le couvercle (56) tout comme, également, le carter (38) de la soupape de sortie, sont maintenus dans l'alésage (20) du carter.

5. Pompe selon la revendication 1, caractérisée en ce qu'un tenon de centrage (58) du carter (38) de la soupape de sortie, vient en prise dans le couvercle (56).

FIG.1

FIG.2